(19) Europäisches Patentamt

European Patent Office

Office européen des brevets

(11) **EP 1 041 360 A2**

(12) **EUROPEAN PATENT APPLICATION**

(43) Date of publication:
04.10.2000 Bulletin 2000/40

(51) Int. Cl.$^7$: **G01C 3/10**

(21) Application number: 00106089.6

(22) Date of filing: 30.03.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 31.03.1999 JP 9293499

(71) Applicant: **SEIKO PRECISION INC.**
**Tokyo, 130-0031 (JP)**

(72) Inventors:
• **Oda, Hajime,**
**Seiko Precision Inc.**
**Narashino-shi, Chiba-ken (JP)**
• **Kishimoto, Kimitaka,**
**Seiko Precision Inc.**
**Narashino-shi, Chiba-ken (JP)**

(74) Representative:
**Hoffmann, Eckart, Dipl.-Ing.**
**Patentanwalt,**
**Bahnhofstrasse 103**
**82166 Gräfelfing (DE)**

(54) **Sensor system**

(57) There is disclosed a power-saving sensor system such as a distance measurement sensor making use of light projection type triangulation. The sensor system has a sensor means (DMM 2) and a CPU (102) for controlling the supply of electrical power to the sensor means, acquiring the output from the sensor means, and performing desired processing. The CPU turns on control signals ($P_1$, $P_2$, $P_3$) in response to a trigger signal (Tp) from a timer circuit (101), thus supplying electrical power to a distance measurement module of the sensor means. A distance measurement IC (201) within the module produces an emission signal in response to one of the control signals ($P_3$) being turned on. This activates the module to perform a distance measurement. The presence or absence of an object is determined from the detected distance value. According to the presence or absence, a transistor ($Tr_2$) is turned on or off. A signal indicating the distance or the presence or absence of an object is produced at a terminal ($T_8$). The CPU detects the end of light projection by making use of an inversion (Iri) of the emission signal. Immediately thereafter, an acquiring signal ($P_4$) is turned on to turn on a switch ($SW_2$). The module's output is acquired. Immediately after the end of the acquirement, the control signals ($P_4$, $P_2$, $P_1$, and $P_3$) are turned off, cutting off the supply of power to the distance measurement module.

FIG. 1

**Description**

The present invention relates to a sensor system.

A distance measurement sensor of the light projection triangulation type is available which has a light projector portion for directing pulsed light to an object to be measured. A light receiver portion is located at a given base line length from the light projector portion and light reflected from the object is received by the light receiver portion, and the distance to the object to be measured is determined. If this sensor is operated at a high speed continuously, a large amount of electrical power is consumed.

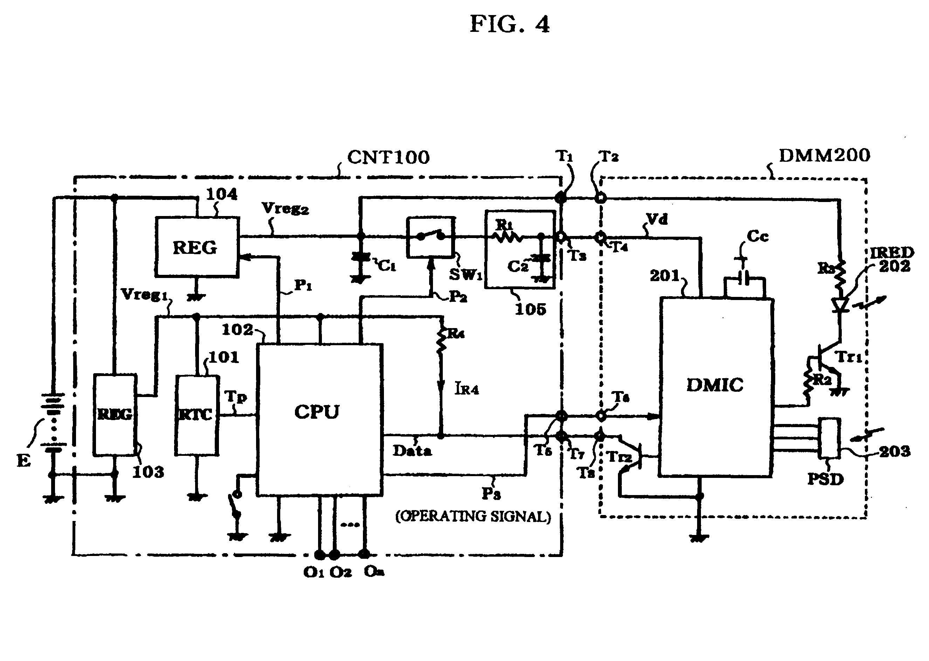

A known method of reducing the power consumed by such sensor is illustrated in Fig. 4, where a general-purpose controller is added to the sensor. This controller controls the operation of the sensor such that it operates at low frequency and intermittently.

The configuration shown in Fig. 4 is briefly described. The general-purpose controller (hereinafter referred to as CNT) is indicated by numeral 100 and uses a battery E as a power supply. It is connected with a distance measurement module (DMM) 200 via terminals $T_1$-$T_8$ to control the operation of the DMM 200 via these terminals. Let Tp, $P_1$, $P_2$, and $P_3$ be output signals appearing at terminals Tp, $P_1$, $P_2$, and $P_3$, respectively, shown in Fig. 4.

The CNT 100 is now described. The CNT 100 has a low power-consumption power-supply regulator circuit (hereinafter referred to as REG) 103 forming a low power-consumption power source. The voltage $V_{reg1}$ from REG 103 is supplied to a low power-consumption timer circuit (hereinafter referred to as RTC) 101 and to a CPU 102. A power-supply circuit (REG) 104 provides the operating power source (voltage $V_{reg2}$) for the DMM 200. The RTC 101 intermittently supplies a trigger signal Tp to the CPU 102, which in turn is triggered by the trigger signal Tp to operate in a given manner. Normally, the CPU 102 is in a standby mode in which it consumes only a small amount of electrical power. When the signal $P_1$ from the CPU 102 is ON, the REG 104 generates voltage $V_{reg2}$. When the signal $P_1$ is OFF, the REG 104 is in a standby mode in which it consumes only a small amount of electrical power. The output signal $P_2$ from the CPU 102 turns on or off a switch $SW_1$. When the signal $P_2$ is ON, the switch $SW_1$ permits supply of a voltage to the DMM 200. A resistor $R_1$ and a capacitor $C_2$ together form a power-supply filter circuit 105 for a distance measurement IC (hereinafter referred to as DMIC) 201. Where the time constant is set large and a large current flows through an IRED (infrared-emitting diode) 202 in the DMM 200, the filter circuit 105 suppresses variations in the electrical power through the DMIC 201. Also shown are a capacitor $C_1$ and a so-called pull-up resistor $R_4$.

The DMM 200 is made up of the DMIC 201, the IRED 202, a PSD (position-sensitive detector) 203,

resistors $R_2$, $R_3$, transistors $Tr_1$, $Tr_2$, a capacitor $C_c$, and so on, and operates as a distance measurement sensor. This sensor has an output terminal $T_8$ at which the sensor output, i.e., a signal indicating the result of a distance measurement, appears. This output terminal is connected to the collector of the transistor $Tr_2$. That is, the output terminal for outputting the sensor output is an output terminal of the open-collector type.

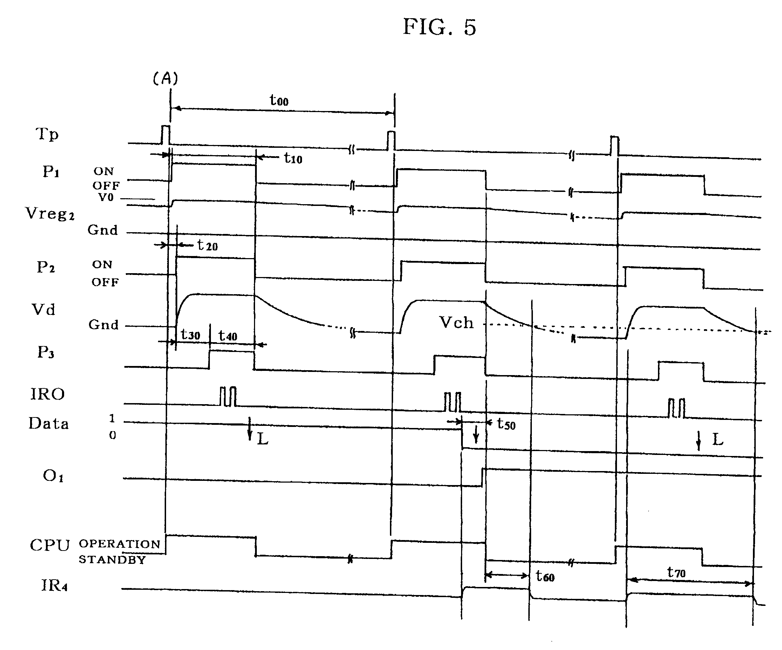

The operation is next described briefly by referring to Fig. 5, where Tp, $P_1$, $V_{reg2}$, $P_2$, Vd, $P_3$, $Ir_0$, Data, and $O_1$ indicate voltage waveforms at terminals Tp, $P_1$, $V_{reg2}$, $P_2$, Vd, $P_3$, $IR_0$, Data, and $O_1$, respectively, shown in Fig. 4. In Fig. 5, $IR_4$ indicates the waveform of the current through resistor $R_4$ shown in Fig. 4. In Fig. 5, CPU indicates the relation between the operation of the CPU shown in Fig. 4 and its standby mode.

The RTC 101 produces the trigger signal Tp with a period $t_{00}$. In response to such trigger signal Tp, the CPU 102 turns on the signal $P_1$ for a time interval $t_{10}$ and operates the REG 104. After a lapse of time $t_{20}$, the operation of the power-supply circuit 104 stabilizes. Then, the signal $P_2$ is turned on, thus turning on the switch $SW_1$. The output voltage $V_{reg2}$ from the REG 104 is supplied to the filter circuit 105, whose output voltage Vd is applied as operating voltage to the DMM 200.

In response to the signal $P_2$ being turned on, electrical power is thus supplied to the DMIC 201 within the DMM 200. Then, the CPU 102 waits for a time interval $t_{30}$ to allow the DMIC 201 to stabilize. Then the CPU 102 turns on the operating signal $P_3$ for a time interval $t_{40}$, thus causing the DMM 200 to start an operation for a distance measurement.

In response to the operating signal $P_3$ being turned on, the DMIC 201 produces an emission signal $IR_0$ to operate the IRED 202 to perform a distance measurement. The result is reflected in the state (i.e., ON or OFF) of the transistor $Tr_2$. This result (the sensor output) is sent to the CPU 102 from the collector terminal of the transistor $Tr_2$. In particular, if an object to be measured is detected, the transistor $Tr_2$ is turned on, causing the terminal $T_8$ to assume state 0. If no object to be measured is detected, the transistor $Tr_2$ is turned off, making the terminal $T_8$ assume state 1. When the ON state of the signal $P_3$ ends, the CPU 102 turns off the signals $P_1$ and $P_2$ and returns to the standby mode.

In this way, the CNT 100 controls the operation of the DMM 200 to cause intermittent distance measurement operations of the DMM 200.

In the distance measurement sensor as described above, the capacitor $C_c$ or the like is connected with the distance measurement IC (DMIC) 201 to generate a given operating frequency. A timing signal for the distance measurement operation is created according to the generated frequency. Therefore, depending on the specifications of the distance measurement sensor, the pulse width of the light emitted from the IRED 202 may be increased. For this purpose, this operating frequency $f_0$ may be lowered. That is, the time taken to project light has some interval of time.

Where this is taken into consideration, in order to assure that data, i.e., the sensor output, obtained by a distance measurement can be correctly acquired by the CPU 102 by operating the DMM 200 intermittently, the supply of electrical power to the DMM 200 should not be interrupted during the measurement operation, even if the operating speed of the DMM 200 is low and a long time is taken to emit light.

To solve the aforementioned problem, it is necessary that the time between the instant when the DMM 200 starts an operation for a distance measurement and the instant when the power supply is turned off, i.e., the width (duration) of the ON state of the signal $P_3$, be set so long that no troubles occur even if the operating frequency $f_0$ is the lowest. In this case, an allowance is given, and the possibility of occurrence of malfunctions decreases accordingly. However, the amount of wasteful power consumption increases.

In another method, an adjusting means is provided for the CNT 100. According to the specifications of the DMM 200, the timing at which the CNT 100 acquires the measurement data is delayed or the time for which electrical power is supplied to the sensor is set sufficiently long. In this way, an adjustment is necessary. That is, in this case, the CNT 100 must be adjusted according to the actually used operating frequency of the DMM 200. If a general-purpose product is used as the CNT 100, each individual product needs adjustments. Furthermore, if the CNT 100 is managed by adjusting it, the operating frequency $f_0$ varies due to variations in capacitance among the individual products used as the capacitor $C_c$, temperature variations, and variations in characteristics among the individual products used as the DMIC 201. To cope with variations in the time taken to emit light due to variations in the operating frequency $f_0$ as described above, it is necessary to set the duration of the ON state of the signal $P_3$ at a sufficiently long time, even if cumbersome operations such as adjustments are performed. As a result, a voltage is kept applied to the DMIC 201 in spite of the fact that the distance measurement operation has already ended in practice. Hence, electrical power continues to be wasted.

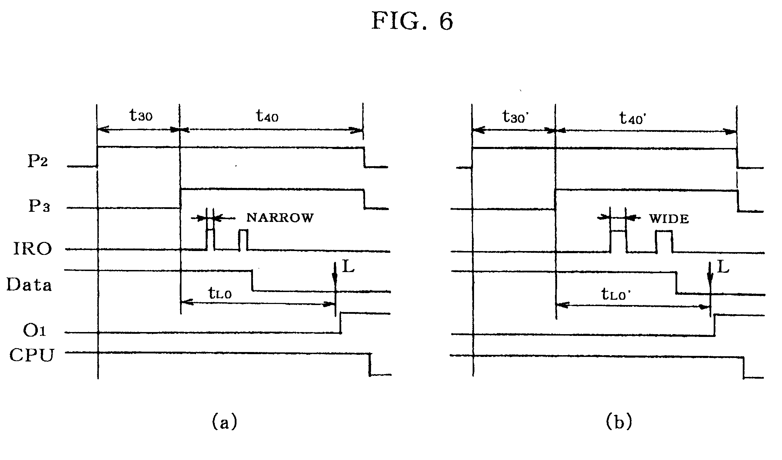

This drawback is described by referring to Figs. 6(a) and 6(b). Fig. 6(a) illustrates the operation when the operating frequency $f_0$ is relatively high. Fig. 6(b) illustrates the operation when the operating frequency $f_0$ is relatively low. The time between the leading edge of the signal $P_3$ and the acquiring time L (i.e., the time at which the CPU acquires the sensor output) is set constant and sufficiently long ($tL0 = tL0'$, $t_{30} = t_{30}'$, $t_{40} = t_{40}'$) so that the sensor output can be acquired (read) at time L even if the operating frequency $f_0$ varies. After being acquired by the CPU 102 and processed, data is delivered from the output terminal $O_1$. Then, the signals $P_2$ and $P_3$ are turned off to stop the supply of electrical power. Also, the CPU 102 itself makes a transition from the operation mode to the standby mode. That is, even after the distance measurement operation ends and data derived from the measurement is delivered, a voltage is kept applied to the DMIC 201. In consequence, wasteful power consumption continues.

This problem is not limited to a light projector-type distance measurement sensor. Rather, this problem arises with every sensor means that performs a desired measurement and then produces an output signal corresponding to the results of the measurement. That is, where the time taken to perform a given measurement has some time duration, electrical power is supplied for a time sufficient to accommodate the duration. This method produces the aforementioned problem.

Many sensors use the open-collector output ($Tr_2$) to allow sending the sensor output even to a system that uses a different operating voltage or to permit a relay or the like to be directly activated. In this scheme, the pull-up resistor $R_4$ couples the open-collector output to the power source REG 103 ($V_{reg1}$) for the CPU 102 to acquire the data.

The DMM 200 judges whether there is an object to be measured or not. If an object to be measured is detected, the transistor $Tr_2$, which is normally OFF, is switched ON. In this configuration, current is kept supplied to the pull-up resistor $R_4$ from the power source REG 103 ($V_{reg1}$) during the interval $t_{50}$ between the instant when the transistor $Tr_2$ is turned on and the instant when the signal $P_3$ is turned off as well as during the interval $t_{60}$ between the instant when the interval $t_{50}$ ends and the instant when the voltage Vd reaches the cutoff voltage Vth of the DMIC 201, as shown in Fig. 5, for the following reason. Even if the power to the DMM 200 is cut off, the voltage Vd applied to the DMIC 201 does not quickly drop to zero because of electric charge stored in the capacitor $C_2$. Rather, the voltage gradually decreases to the cutoff voltage of the DMIC 201 because of the power consumption by the DMM 200. Therefore, the power consumption at the resistor $R_4$ hinders reducing the power consumption. If the voltage Vd further drops to the cutoff voltage Vth, the state is often maintained for a relatively short time (from on the order of seconds to on the order of minutes). If power is then supplied, the transistor $Tr_2$ may be kept in conduction. Current starts to flow through the pull-up resistor from the application of the power during an interval of $t_{70}$. Such a current is important to a low power-consumption sensor. This hinders reducing the power consumption.

It is an object of the present invention to provide a sensor system overcoming the above described problems of the prior art and having less power consumption than is possible in the prior art.

This object is achieved with a sensor system as claimed in claim 1. Preferred embodiments of the invention are subject-matter of the dependent claims.

The present invention provides a sensor system having a sensor and a controller for controlling the supply of electrical power to the sensor. The controller acquires the output from the sensor and performs desired processing. The controller includes a power-supply switch for switching on and off the supply of electrical power to the sensor and a control circuit for turning off the power-supply switch in response to the acquirement of the sensor output. This assures that the sensor output is acquired. Furthermore, power consumption can be curtailed. Therefore, the problems with the prior art construction can be reduced. In the past, electrical power has been wasted to assure correct acquirement of the sensor output, or the power application time has been set short to reduce wasteful power consumption, which would have made it impossible to acquire the sensor output.

Where the aforementioned sensor is a distance measurement sensor comprising a light projector means, a driver circuit for supplying an emission signal to the projector means, and a light-receiving means for receiving light resulting from the projection of light from the light projector means, if the controller described above initiates acquiring the sensor output in response to the emission signal, the same advantages can be obtained as the foregoing. Furthermore, the emission signal can be used for light projection and for the start of acquirement of the sensor output, thus simplifying the structure compared with the structure in which separate signals for the light projection and for the start of acquirement, respectively, are produced.

The electric current wasted by resistors can be reduced further by the following configuration. The sensor described above has an open-collector type output terminal from which the sensor output is taken off. The controller described above further includes a series circuit of a resistor and a switching means. The series circuit is connected between the open-collector output terminal and a power supply. A voltage developed at the junction of the resistor and the output terminal is acquired as the sensor output. The control circuit turns on or off the switching means according to the emission signal.

Where the controller assumes a standby state in which the power consumption is low, in response to the end of the desired processing, the same advantages as the foregoing can be achieved. Furthermore, the controller achieves further reduction of power consumption.

Other objects and features of the invention will apparent in the course of the description of a preferred embodiment thereof in connection with the accompanying drawings, in which:

Fig. 1      is a circuit block diagram of a sensor system in accordance with the present invention;

Figs. 2 and 3      are a timing charts illustrating the operation of the sensor system shown in Fig. 1;

Fig. 4      is a circuit block diagram of a prior art sensor system; and

Figs. 5 and 6      are a timing charts illustrating the operation of the sensor system shown in Fig. 4.

Details of the present invention are hereinafter described in relation to one embodiment illustrated in the accompanying drawings. A distance measurement module is taken as an example of a sensor. The sensor is not limited to this. Any other means for detecting or measuring an object of interest may also be used as the sensor.

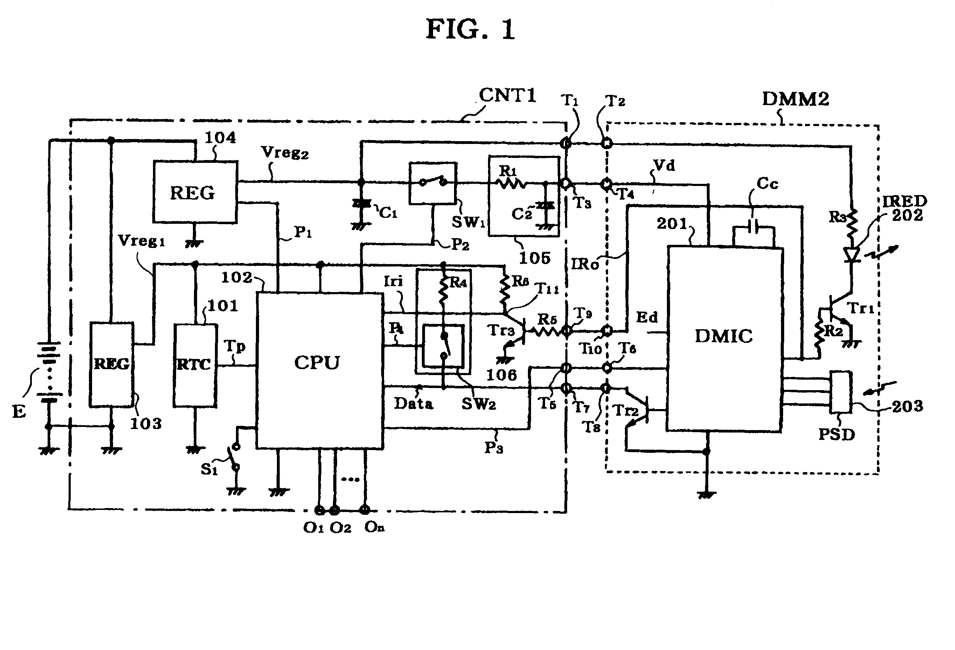

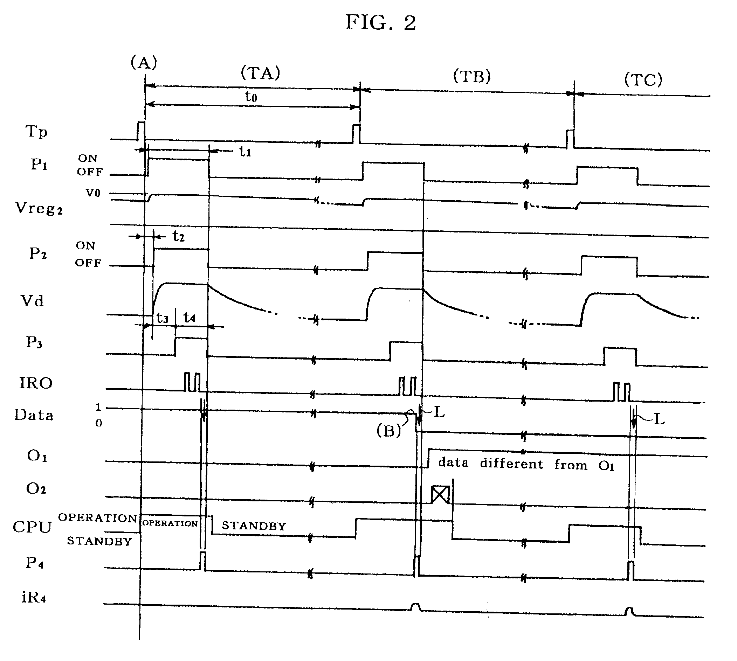

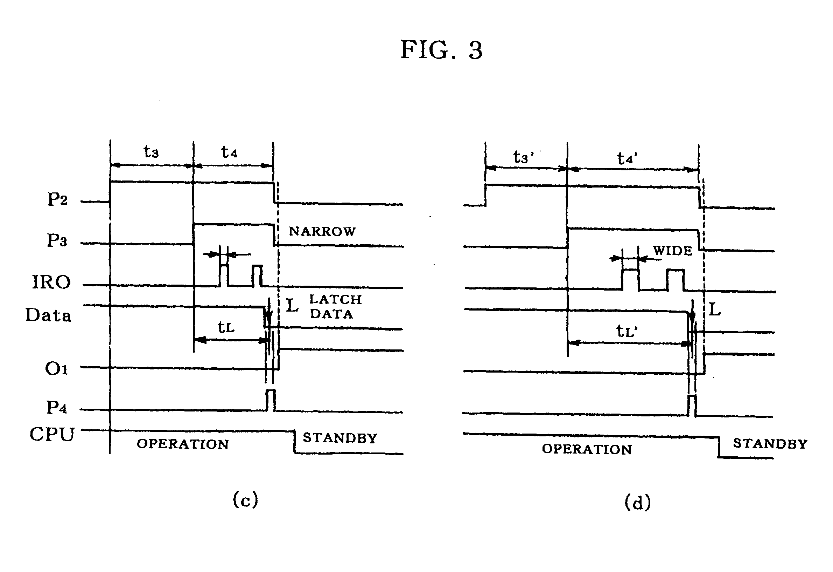

Fig. 1 is a circuit block diagram of a sensor system in accordance with the invention. Figs. 2 and 3 are timing diagrams illustrating the operation. Note that like components are indicated by like reference numerals in both Figs. 1 and 4 and will not be explained again.

Referring to Fig. 1, a controller (hereinafter referred to as CNT) 1 acts as a control means and uses a battery E as its power supply. The CNT 1 is connected with a distance measurement module (hereinafter referred to as DMM) 2 via terminals $T_1$-$T_{10}$, and controls the operation of the DMM 2 via these terminals. A series circuit 106 consists of a series combination of the pull-up resistor $R_4$ and a switch $SW_2$, and is connected between the low power-consumption power source REG 103 ($V_{reg1}$) and the output terminal $T_8$ (open-collector type output terminal) of the DMM 2 connected via the terminal $T_7$. An emission signal $IR_0$ for the IRED 202 is applied to the base of a transistor $Tr_3$ via a resistor $R_5$. The collector of the transistor $Tr_3$ is connected with the power source REG 103 ($V_{reg1}$) via a resistor $R_6$. A junction terminal $T_{11}$ between the collector of the transistor $Tr_3$ and the resistor $R_6$ is connected with the CPU 102.

The operation is described by referring to Fig. 2. Note that like waveforms are indicated by like reference numerals in both Figs. 2 and 4. In Fig. 2, $O_2$ and $P_4$ indicate voltage waveforms at the terminals $O_2$ and $P_4$, respectively, shown in Fig. 1.

The RTC 101 produces the trigger signal Tp with a period $t_0$ (e.g., 0.5 second). In response to each trigger signal Tp, the CPU 102 turns on the signal $P_1$ to operate the REG 104. After a lapse of $t_2$, the operation of the REG 104 stabilizes. Then the signal $P_2$ is turned on, thus turning on the switch $SW_1$. The voltage $V_{reg2}$ from the REG 104 is applied to the filter circuit 105. Its output voltage Vd is supplied as operating voltage to the DMIC 201. So far, the operation is the same as that of the prior art structure shown in Fig. 4.

After electrical power is supplied to the DMIC 201 in response to the ON state of the signal $P_2$, the CPU 102 waits for a time interval $t_3$, i.e., until the operation of the DMIC 201 stabilizes. Then, the operat-

ing signal $P_3$ is turned on to start an operation for a distance measurement using the DMM 2. In the present embodiment, the ON time of this operating signal $P_3$ is not previously set on the side of the CNT 1. Rather, the ON time is self-adjusted according to the operation of the DMM 2. Hence, the amount of electrical power wasted is reduced compared with the prior art technique. This operation will be described later.

The DMIC 201 in the DMM 2 produces the emission signal IR0 in response to the operating signal $P_3$ assuming the ON state. This operates the IRED 202 to perform a distance measurement. Specifically, the IRED 202 is made to emit light a given number of times (two times in the present example). Light reflected from an object to be measured is received by the PSD 203. The output from the PSD 203 is arithmetically processed to detect the distance. In response to information including the detected distance value and the presence or absence of an object judged from the distance value, the transistor $Tr_2$ is turned on or off. A signal indicating this information about the distance and the presence or absence is made to appear at the terminal $T_8$. In the present example, where an object is detected, the transistor $Tr_2$ is turned on. Where no object is detected, the transistor $Tr_2$ is turned off.

The emission signal $IR_0$ produced from the IRED 202 while the DMM 2 is performing a distance measurement is inverted in level by the resistor $R_5$, the transistor $Tr_3$, and the resistor $R_6$, producing an inverted signal Iri to the CPU 102. The emission signal $IR_0$ is normally a relatively short pulse of approximately microseconds to tens of microseconds and so the increase in the average current consumption due to the level inversion is only slight.

The CPU 102 detects the end of the light projection operation of the IRED 202 by making use of the inverted signal Iri. In the present embodiment, it is assumed that the emission operation is ended when the IRED 202 emits light the second time. The end of the emission operation is detected by detecting the trailing edge of the second pulse of the emission signal $IR_0$. The number of emissions is not limited to two. The number may be modified as desired.

On detection of the end of the light projection, the CPU 102 judges that the sensor output, i.e., information indicating the presence or absence of an object, is produced from the DMM 2. To permit this sensor output to be acquired, the CPU 102 immediately turns on the signal $P_4$. This turns on the switch $SW_2$. Therefore, the pull-up resistor $R_4$ is connected with the collector of the transistor $Tr_2$. A signal produced at the terminal T8 and coming from the DMM 2 can be acquired via the terminal Data. That is, the terminal $T_8$ is coupled to the voltage $V_{reg1}$ via the pull-up resistor $R_4$. Consequently, the voltage at the terminal Data assumes level 1 or 0, depending on whether the transistor $Tr_2$ is ON or OFF. The CPU 102 can acquire this as a binary-coded signal representing the sensor output.

After lapse of a time interval (several microseconds to several tens of microseconds in practice) from the end of the light projection from the IRED 202 to the begin of the production of the sensor output, since the CPU 102 has turned on the signal $P_4$, the sensor output appearing at the terminal Data is acquired by the CPU 102. If the voltage at the terminal Data rises slowly, due to the ON resistance of the switch $SW_2$ or its capacitance, when the signal $P_4$ is turned on to connect the resistor $R_4$, the CPU may wait for a time (several microseconds at the longest) longer than normal after the signal $P_4$ has been turned on, namely until the voltage becomes constant. In this way, the sensor output is acquired after it appears at the terminal Data, and so the time between the instant when the sensor output is produced and the instant when it is acquired can be controlled. Therefore, the aforementioned time between the instant when the sensor output appears at the terminal Data and the instant when it is acquired is prevented from becoming unnecessary long. That is, the wasteful wait time can be reduced.

Immediately after acquiring the sensor output from the DMM 2 as described above, the CPU 102 turns off the signal $P_4$, turning off the switch $SW_2$. This disconnects the resistor $R_4$. The signals $P_2$, $P_1$, and $P_3$ are then also turned off and the supply of electrical power to the DMM 2 is cut off. As a result, the ON time of the signal $P_3$ becomes shorter than is conventionally the case. The current $iR_4$ flowing through the resistor $R_4$ is quite small on the average.

Since the CNT 1 turns off the power-supply switch $SW_1$ in response to the acquirement of the sensor output from the DMM 2 in this way, it is assured that the sensor output is indeed acquired. Furthermore, electrical power can be saved. Consequently, the sensor system in accordance with the present invention is free from the problems of the prior art sensor system. That is, in the prior art sensor system, supply of electrical power is continued in spite of the end of the operation of a sensor to assure acquirement of the sensor output, resulting in a wastage of power. Where the supply of electrical power to the sensor is cut off while the sensor is in operation in an attempt to reduce wasteful power consumption, it will be impossible to acquire the sensor output.

After a signal representing the sensor output appears at the terminal Data, the signal is acquired. Immediately after the end of the acquirement, the supply of electrical power to the DMM 2 is cut off. Therefore, the time between the instant when the sensor output is produced at the terminal Data and the instant when it is acquired is prevented from becoming wastefully long; otherwise, power would be wasted.

Since the emission signal $Ir_0$ for the IRED 202 is used to control the timing at which the sensor output from the DMM 2 is acquired, the structure can be simplified. That is, it is not necessary to produce two signals used for projection of light and for start of acquirement of the sensor output, respectively; otherwise, the structure would be complicated.

Where a DMM 2 is used that outputs the sensor output through an open-collector type output terminal $T_8$, the series circuit 106 of the resistor $R_4$ and the switch $SW_2$ is preferably connected between the output terminal $T_8$ and the power source voltage $V_{reg1}$. A voltage developed at the terminal $T_{11}$ between the resistor $R_4$ and the output terminal $T_8$ is acquired as the sensor output from the DMM 2. The switch $SW_2$ is turned on or off in response to the generation of the emission signal $Ir_0$ for the IRED 202. Therefore, during the time during which no sensor output is produced from the output terminal $T_8$, the switch $SW_2$ can be turned off and the amount of power wasted by the resistor $R_4$ can thus be decreased. Furthermore, the emission signal $Ir_0$ for emission of the IRED 202 is used to turn on or off the switch $SW_2$, thus enabling simplification of the configuration. That is, it is not necessary to produce two output signals used for projection of light and for controlling the switch $SW_2$, respectively; otherwise, the configuration would be complicated.

The CPU 102 performs processing for modifying the acquired sensor output to a given output form. The processed signal is delivered from the output terminals $O_1$, $O_2$, etc. For example, a signal obtained by inverting the level of the signal at the terminal Data or a coded signal is delivered.

The power supply to the DMM 2 is cut off, and then the CPU 102 performs such subsequent processing. This further reduces the amount of current consumed by the DMM 2. That is, the amount of power wasted by the DMM 2 can be reduced.

If signals are produced from the output terminals $O_1$, $O_2$, etc., the CNT 1 returns to its initial state. The mode of operation is switched to the standby mode of low power consumption. Consequently, further power savings can be achieved at the CNT 1.

In Fig. 2, no object is detected during period TA (sensor output is 1). At instant B, the sensor output appearing at the terminal Data is acquired (latched). In this case the sensor output is 0 indicating an object has been detected.

During period TB, a signal indicating a state different from the state of the terminal $O_1$ is produced to the terminal $O_2$.

During period TC, the DMM 2 keeps detecting an object. The state at the terminal Data is again 0. Since the signal $P_4$ is turned ON only for a short period around the data acquirement, the average amount of current consumed by the resistor $R_4$ is smaller than heretofore.

Fig. 3 shows the operation where the operating frequency $f_0$ of the DMIC 201 is varied. Fig. 3, (c), illustrates the operation where the operating frequency $f_0$ is relatively high. Fig. 3, (d), illustrates the operation where the operating frequency $f_0$ is relatively low. In the present embodiment, the timing at which the sensor output is acquired is varied in response to the emission signal $IR_0$ that varies in response to variations in the operating frequency $f_0$ as mentioned previously. That is, the timing at which sensor output is acquired varies in response to variations in the operating frequency $f_0$ ($tL < tL'$, $t_3 = t_3'$, and $t_4 < t_4'$). Therefore, the operating frequency $f_0$ can be set regardless of the time for which power is supplied to the DMM 2. Furthermore, power consumption savings are achieved because the signal $P_2$ is turned off to cut off the supply of power to the distance measurement sensor immediately after the sensor output has been acquired.

In addition, it is not necessary to adjust the CNT 1 according to the rated operating speed of the DMM 2 while saving power consumption. This improves the generality of the CNT 1.

If the distance measurement IC 201 can deliver a signal indicating the completion of a distance measurement or a signal (Ed in Fig. 1) confirming generation of the sensor output, this signal can be detected by the CPU 102 instead of the signal $Ir_0$. The resulting signal may be used for acquiring the sensor output or for control of the operation of the signals $P_2$ and $P_4$.

A switch $S_1$ is provided as a function-setting switch and used to change the measurement interval or the like. Although only one switch $S_1$ is shown, plural switches may also be used.

The present invention provides a sensor system having a sensor and a controller for controlling the supply of power to the sensor. The controller receives the sensor output from the sensor and performs desired processing. This sensor system is characterized in that the controller includes a power-supply switch for switching on or off the supply of power to the sensor and a control circuit for turning off the power-supply switch in response to acquirement of the sensor output. This assures that the sensor output is indeed correctly acquired. Furthermore, power consumption savings can be accomplished. In the past, electrical power has been wasted to assure acquirement of the sensor output, or power consumption decrease has made it impossible to acquire the output from the sensor. The sensor system according to the present invention is free of these problems.

Where the sensor consists of a distance measurement sensor having a light projection means, a driver circuit for supplying an emission signal to the light projection means, and a light-receiving means for receiving reflected light or light resulting from the projection of light from the light projection means, if the controller starts acquiring the sensor output in response to the emission signal, the same advantages can be produced as the foregoing. Furthermore, the emission signal can be used for both light projection and the start of acquirement of the sensor output, thus simplifying the structure.

In an embodiment of the invention, the sensor includes an open-collector type output terminal from which the sensor output is taken off as described above. The aforementioned controller further includes a series circuit of a resistor and a switching means. The series circuit is connected between the open-collector output terminal and a power supply. A voltage developed at the terminal between the resistor and the output terminal is acquired as the sensor output. The control circuit turns on or off the switching means according to the emission signal. This structure can reduce the amount of current wasted by the resistor.

Where the controller described above is set in the standby state of low power consumption in response to the end of the desired processing, the same advantages as the foregoing can be gained. Additionally, the controller can reduce power consumption further.

## Claims

1. A sensor system having a sensor (2), and a controller means (1) for controlling supply of electrical power to said sensor, acquiring the output from said sensor, and performing desired processing on the acquired output, wherein said controller includes a power-supply switch ($SW_1$) for switching on and off the supply of electrical power to said sensor and a control circuit ($R_5$, $R_6$, $Tr_3$) for turning off said power-supply switch in response to an acquirement of the output from said sensor.

2. The sensor system of claim 1, wherein said sensor (2) is a distance measurement sensor having light projection means (202), a driver circuit (201) for supplying an emission signal to said light projection means, and light-receiving means (203) for receiving light resulting from light projected from said light projection means, and wherein said controller (1) starts acquiring the output from said sensor according to said emission signal.

3. The sensor system of claim 2, wherein

   said sensor (2) includes an open-collector type output terminal ($T_8$),
   said controller (1) further includes a series circuit of a resistor ($R_4$) and a switching means ($SW_2$),
   said series circuit is connected between said output terminal ($T_8$) and a power supply (103, $V_{reg1}$),
   the voltage at the junction between said resistor ($R_4$) and said output terminal ($T_8$) is acquired as said output from said sensor (2), and
   said control circuit turns on and off said switching means according to said emission signal.

4. The sensor system of any one of claims 1 to 3, wherein said controller (1) is adapted to enter a standby state of low power consumption in response to the end of said desired processing.

FIG. 1

# FIG. 2

EP 1 041 360 A2

FIG. 3

(c)

(d)

EP 1 041 360 A2

# FIG. 4

CNT100

DMM200

$T_1$  $T_2$

104

REG

$Vreg_2$

$Vreg_1$

$P_1$

102

101

REG

RTC

$T_p$

CPU

$C_1$

$SW_1$

105

$R_1$

$C_2$

$T_3$  $T_4$

$Vd$

$C_c$

201

$R_3$

IRED 202

$T_{r1}$

$R_2$

DMIC

$R_4$

$I_{R4}$

$P_2$

$T_5$

$T_6$

$T_7$  $T_{r2}$

$T_8$

PSD

203

E

103

Data

$P_3$

(OPERATING SIGNAL)

$O_1$  $O_2$  $O_n$

EP 1 041 360 A2

# FIG. 5

EP 1 041 360 A2

# FIG. 6

(a)

(b)